# EUROPÄISCHE PATENTANMELDUNG

(11) **EP 0 769 704 A2**
(43) Veröffentlichungstag der Anmeldung: **23.04.1997**
(21) Anmeldenummer: 96116131.2
(22) Anmeldetag: 09.10.1996
(51) Int. Cl.: G01S 5/14, G01S 1/04

(54) **Empfangseinrichtung zur Auswertung von Ortungsdaten**

(30) Priorität: 18.10.1995 DE 19538694
(71) Anmelder: ROBERT BOSCH GMBH, 70442 Stuttgart (DE)
(72) Erfinder: Schmidt-Tychsen, 12359 Berlin (DE); Keutmann, Christoph, 13585 Berlin (DE)

(57) **Zusammenfassung**

Es wird eine Empfangseinrichtung(1) vorgeschlagen, die zur Auswertung von Ortungsdaten, insbesondere von GPS-Ortungsdaten dient. Die Empfangseinrichtung (1) umfaßt einen ersten Empfänger (70) zum Empfang der Ortungsdaten und einen zweiten Empfänger (5), mit dem Zusatzinformationen für die Ortungsdaten empfangbar sind. Mit dem zweiten Empfänger (5) sind noch weitere Zusatzdaten empfangbar, die von einer ebenfalls in der Empfangseinrichtung (1) enthaltenen Auswerteeinheit (55) selektiert und ausgewertet werden. Die weiteren Zusatzdaten können ein Aufwecktelegramm enthalten, das eine Einschaltaufforderung zum Einschalten eines Sendeempfängers (65) zur Kommunikation mit einer Leitstelle zur Verfügung stellt. Die weiteren Zusatzdaten können auch ein Einschlaftelegramm enthalten, das eine Ausschaltaufforderung zum Ausschalten des Sendeempfängers (65) oder zum Einschalten eines Stromsparmodus zur Verfügung stellt. Die weiteren Zusatzdaten können auch ein Rückmeldeaufforderungsprogramm enthalten, das eine Aufforderung zur Kontaktaufnahme mit der Leitstelle zur Verfügung stellt. Die weiteren Zusatzdaten werden dabei aus diesen zugeordneten Zeitschlitzen eines Langwellen- oder Ultrakurzwellensignals von der Auswerteeinheit (55) selektiert. Dazu muß der zweite Empfänger (5) ein Langwellen- beziehungsweise Ultrakurzwellenempfänger sein. Durch die weiteren Zusatzdaten läßt sich auch ein Steuergerät (40) zur Aktivierung und Deaktivierung einer Diebstahlsperre schalten. Außerdem können die Zusatzdaten zur Steuerung einer Fahrzeugflotte von einer Leitstelle aus eingesetzt werden.

## Beschreibung

### Stand der Technik

Die Erfindung geht von einer Empfangseinrichtung zur Auswertung von Ortungsdaten nach der Gattung des Hauptanspruchs aus.

Aus der Druckschrift "DGON-Seminar SATNAV 94, Satellitennavigationssysteme, Grundlagen und Anwendungen", 24. bis 26. Oktober 1994, Hamburg sind Untersuchungen zur bundesweiten Ausstrahlung von DGPS-Korrekturortungsdaten für Echtzeitanwendungen bekannt. Die Druckschrift zeigt den prinzipellen Aufbau von Referenz- und Mobilstation. Eine Referenzstation weist einen GPS-Empfänger auf, der über einen Personal-Computer mit dem Sende-Modem eines Telekom-Langwellensenders verbunden ist. Aus den empfangenen GPS-Ortungsdaten werden durch die empfängerinterne Software DGPS-Korrekturortungsdaten berechnet und im RTCM-Format (RTCM = Radio Technical Commission For Maritme Services) ausgegeben. Im Sende-Modem werden die DGPS-Korrekturortungsdaten einer Trägewelle aufmoduliert und vom Langwellensender ausgestrahlt. Die ausgestrahlten DGPS-Korrekturortungsdaten werden von mobilen Stationen mit Festfrequenzlangwellenempfängern empfangen. Die mobilen Stationen weisen einen Personal-Computer und einen GPS-Empfänger auf, denen die vom Festfrequenzlangwellenempfänger empfangenen DGPS-Korrekturortungsdaten zugeführt werden, wobei der GPS-Empfänger zusätzlich mit dem Personal-Computer verbunden ist. Die empfangenen Korrekturdatensätze im RTCM - Format werden im Personal-Computer der mobilen Station gespeichert und anschließend zur Berechnung der verbesserten Position der mobilen Antenne an den GPS-Empfänger weitergegeben. Durch empfängerinterne Software wird für jeden ankommenden Korrekturdatensatz eine aktuelle Position ermittelt. Das entstandene Positionsfile wird vom GPS-Empfänger dem Personal-Computer zugeführt und dort gespeichert.

### Vorteile der Erfindung

Die erfindungsgemäße Empfangseinrichtung mit den Merkmalen des Hauptanspruchs hat demgegenüber den Vorteil, daß eine kostensparende und wenig aufwendige Möglichkeit zum Empfang und zur Auswertung von Zusatzdaten neben den Korrekturortungsdaten mit ein und demselben Empfänger gegeben ist.

Durch die in den Unteransprüchen aufgeführten Maßnahmen sind vorteilhafte Weiterbildungen und Verbesserungen der im Hauptanspruch angegebenen Empfangseinrichtung möglich.

Vorteilhaft gemäß den Ansprüchen 4 und 5 ist die Ausnutzung freistehender Datenzeitschlitze für die weiteren Zusatzdaten. Auf diese Weise sind mehr Informationen übertragbar.

Vorteilhaft nach Anspruch 5 ist die Reservierung eines eigenen Kanals für die Zusatzdaten. Auf diese Weise ist ein verbesserter Zugriff mit größerer Störsicherheit auf die Zusatzdaten möglich. Vorteilhaft nach Anspruch 6 und Anspruch 8 ist die Möglichkeit für eine Leitstelle, einen Benutzer der Empfangseinrichtung zu erreichen, auch wenn der Sendeempfänger zur Kommunikation mit der Leitstelle abgeschaltet ist oder sich außerhalb der Reichweite des von der Leitstelle üblicherweise verwendeten Funknetzes befindet.

Vorteilhaft nach Anspruch 7 ist die Möglichkeit für die Leitstelle, den Benutzer eines eingeschalteten Sendeempfängers zum Ausschalten für den Fall zu bewegen, daß keine Kommunikation mit der Leitstelle vorgesehen oder möglich ist.

Vorteilhaft nach Anspruch 9 ist die Möglichkeit, einen Benutzer, der sich nicht bei der Bmpfangseinrichtung aufhält, zu erreichen.

Vorteilhaft nach Anspruch 10 ist die hohe Zuverlässigkeit einer funkgesteuerten Diebstahlsperre.

Als Vorteil nach Anspruch 12 ist anzusehen, daß Teilnehmer eine Flotte auch dann Informationen zur Flottensteuerung erhalten können, wenn sie über den üblichen Funkweg nicht mehr erreichbar sind.

### Zeichnung

Ein Ausführungsbeispiel der Erfindung ist in der Zeichnung dargestellt und in der nachfolgenden Beschreibung näher erläutert. Es zeigen Figur 1 eine Empfangseinrichtung in einem Fahrzeug, das Teilnehmer einer Flotte ist, Figur 2 die Steuerung und Disposition der Flotte über ein Bündelfunknetz und einen Langwellensender, Figur 3 Zeitschlitze zur Übertragung von Zusatzdaten und Figur 4 einen RDS-Kanal im UKW-Frequenzband.

### Beschreibung des Ausführungsbeispiels

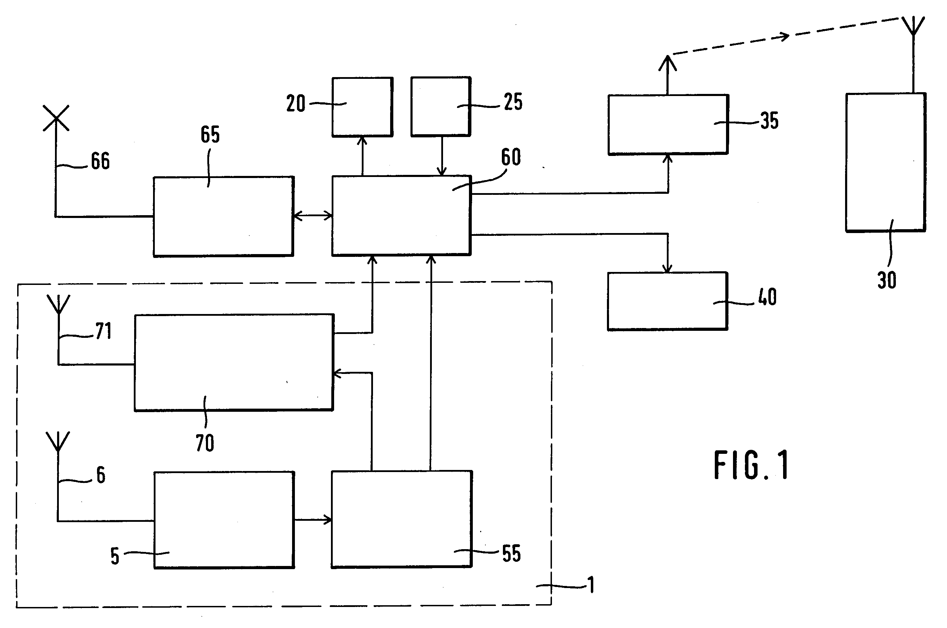

In Figur 1 kennzeichnet 1 eine Empfangseinrichtung. Die Empfangseinrichtung 1 enthält einen Empfänger 70 für GPS-Ortungsdaten, die dem Empfänger 70 über eine erste Empfangsantenne 71 zugeführt werden. Die Empfangseinrichtung 1 enthält außerdem eine zweite Empfangsantenne 6, die über einen Empfänger 5 für DGPS-Korrekturortungsdaten mit einer Auswerteeinheit 55 verbunden ist. Die von der Auswerteeinheit 55 ausgewerteten DGPS-Korrekturortungsdaten werden dem Empfänger 70 für GPS-Ortungsdaten zugeführt. Die Auswerteeinheit 55 und der Empfänger 70 für GPS-Ortungsdaten sind mit einem Bordrechner 60 verbunden. An den Bordrechner 60 sind eine Anzeigeinrichtung 20, eine Tastatur 25, ein Sendeempfänger 65, ein Transponder 35 und ein Steuergerät 40 angeschlossen. Der Sendeempfänger 65 ist mit einer Sendeempfangsantenne 66 versehen. Einem auf die Sendefrequenz des Transponders 35 abgestimmten Funkgerät 30 sind Informationen vom Bordrechner 60 zuführbar.

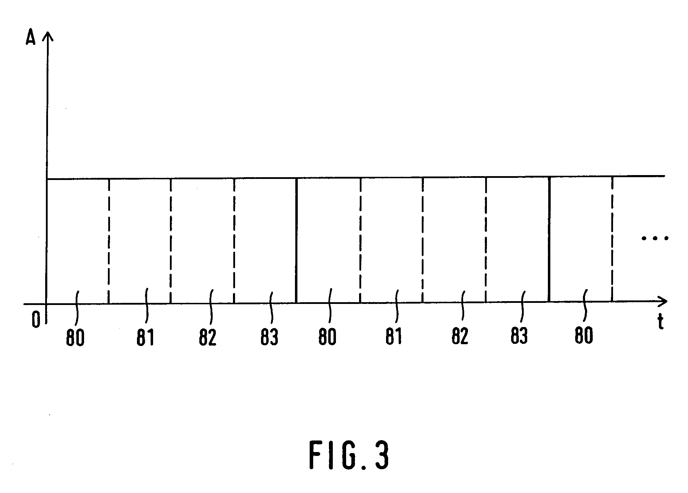

Im Empfänger 5 für DGPS-Korrekturortungsdaten werden Zusatzdaten auf Langwelle empfangen und an die Auswerteeinheit 55 weitergegeben. Das empfangene Langwellensignal ist dabei zeitmultiplex in vier Zeitschlitze 80, 81, 82 und 83 gemäß Figur 3 aufgeteilt. Einer der vier Zeitschlitze 80, 81, 82 und 83, beispielsweise der erste Zeitschlitz 80, ist für die Übertragung der DGPS-Korrekturortungsdaten reserviert. Die restlichen drei Zeitschlitze 81, 82 und 83 können für weitere Zusatzdaten mitbenutzt werden. Dabei sind die drei restlichen Zeitschlitze 81, 82 und 83 den weiteren Zusatzdaten permanent oder nach Bedarf fest zugeordnet, das heißt, die mit den weiteren Zusatzdaten erbrachten Zusatzdienste sind jeweils an einen entsprechenden Zeitschlitz der restlichen drei Zeitschlitze 81, 82 und 83 gekoppelt. Die Besonderheit der Verwendung von Langwellensignalen zur Übertragung der DGPS-Korrekturortungsdaten und der weiteren Zusatzdaten besteht in der durchgängigen (24 Stunden pro Tag) Verfügbarkeit und der großen räumlichen Reichweite (größer 500 km Radius). Auf diese Weise ist eine zeitlich unbegrenzte und landesweite Abdeckung beziehungsweise Erreichbarkeit innerhalb des Empfangsbereichs mit einem einzigen Rundstrahlsender realisierbar. Geographische Ausdehnungen, die die Abdeckungsleistung durch einen einzigen Sender übersteigen, sind mit mehreren Funkzellen zu realisieren. Zum anderen ist bedingt durch die geringe Signalbandbreite des Senders ein ungestörter Empfang auch unter sehr ungünstigen Empfangsbedingungen möglich. Die Empfangsstörsicherheit und Datenintegrität der DGPS-Korrekturortungsdaten und die weiteren Zusatzdaten enthaltenden Funktelegramme wird durch den Einsatz hinreichend bekannter fehlerkorrigierender Blockverfahren abgesichert. Die Auswerteeinheit 55 hat die Aufgabe, die ankommenden Zeitschlitze 80, 81, 82 und 83 zu selektieren. Dabei werden die im RTCM-Format im ersten Zeitschlitz 80 vorliegenden DGPS-Korrekturortungsdaten selektiert und an den Empfänger 70 für GPS-Ortungsdaten weitergeleitet. Die Auswerteinheit 55 hat weiterhin die Aufgabe, aus den verbleibenden drei restlichen Zeitschlitzen 81, 82 und 83 die gewünschten beziehungsweise vom Bordrechner 60 benötigten weiteren Zusatzdaten zu selektieren und an den Bordrechner 60 weiterzuleiten. Der Empfänger 70 für GPS-Ortungsdaten empfängt GPS-Signale, die von Satelliten abgestrahlt werden. Im Empfänger 70 für GPS-Ortungsdaten erfolgt eine Auswertung der entsprechenden Satellitennutzsignale zur Ermittlung des eigenen Standortes auf der Erdoberfläche. Andere Systemlösungen setzen bordeigene Sensoren zur Koppelnavigation ein, besitzen als Rückfallebene jedoch meist noch einen GPS-Empfänger. Da aufgrund diverser externer wie systeminterner Einflüsse wie Zeitbasisfehler, Ausbreitungseffekte, Verzerrungen, usw. die GPS-Ortungsgenauigkeit im Durchschnitt kaum besser als 100 m ist, wird diese Ungenauigkeit mit Hilfe der DGPS-Korrekturortungsdaten soweit reduziert, daß der mittlere Ortungsfehler kleiner als 5 m wird. Dazu werden die DGPS-Korrekturortungsdaten mittels geeigneter Verfahren an einem Bezugsstandort erfaßt und wie bereits beschrieben über den ersten Zeitschlitz 80 eines Langwellensignals abgestrahlt. Mit Hilfe der dem Empfänger 70 für GPS-Ortungsdaten zugeführten DGPS-Korrekturortungsdaten wird dann im Empfänger 70 für GPS-Ortungsdaten die korrigierte Position in Echtzeit an den Bordrechner 60 zur Speicherung ausgegeben. Der Bordrechner 60 hat die Aufgabe die korrigierten Ortungsdaten an den Sendeempfänger 65 weiterzugeben, so daß sie über die Sendeempfangsantenne 66 an eine Leitstelle übermittelt werden können. Weiterhin dient der Bordrechner 60 dazu, die ihm von der Auswerteeinheit 55 zugeführten selektierten weiteren Zusatzdaten auszuwerten und gegebenenfalls über die Anzeigeeinrichtung 20 zur Darstellung zu bringen.

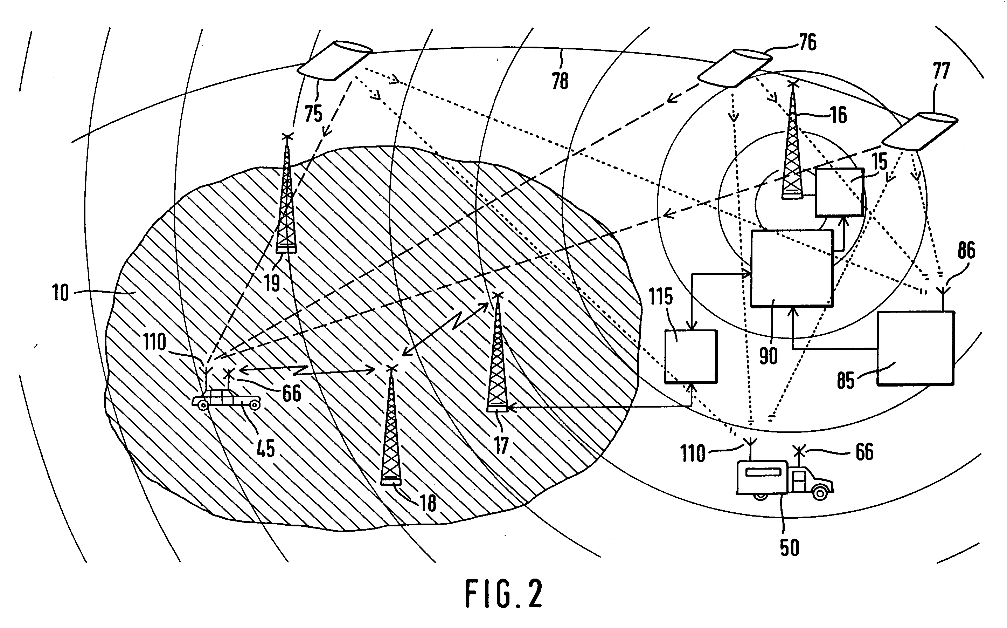

Figur 2 zeigt den Einsatz der Anordnung gemäß Figur 1 in einem Kraftfahrzeug, das Teilnehmer einer Flotte ist, die von einer Leitstelle 90 über Bündelfunk in einem Ausbreitungsgebiet 10 gemäß Figur 2 disponiert und gesteuert wird. In Figur 2 kennzeichnen weiterhin 45 ein im Ausbreitungsgebiet 10 befindliches erstes Kraftfahrzeug und 50 ein außerhalb des Ausbreitungsgebietes 10 befindliches zweites Kraftfahrzeug. Beide Kraftfahrzeuge 45 und 50 sind mit einer Einrichtung gemäß Figur 1 ausgestattet. Dabei sind die beiden Empfangsantennen 71 und 6 zu einer gemeinsamen Multibandantenne 110 zusammengefaßt. Über drei auf einer Umlaufbahn 78 befindliche Satelliten 75, 76 und 77 werden Meßsignale für das satellitengestützte Ortungssstem GPS ausgestrahlt. Ein GPS-Referenzempfänger 85 ist über eine Leitstelle 90 mit einem Langwellensender 15 verbunden, der über eine Rundstrahlantenne 16 DGPS-Korrekturortungsdaten abstrahlt. Die Leitstelle 90 ist außerdem über einen Bündelfunksendeempfänger 115 mit einer ersten Antenne 17 für Bündelfunk, die sich im Ausbreitungsgebiet 10 befindet, verbunden. Die erste Antenne 17 für Bündelfunk versorgt zusammen mit einer zweiten und einer dritten Antenne 18 und 19 für Bündelfunk das Ausbreitungsgebiet 10 mit Signalen von der Leitstelle 90. Die Sendeempfangsantenne 66 des ersten Kraftfahrzeugs 45 im Ausbreitungsgebiet 10 führt über den Bündelfunksendeempfänger 115, die erste und die zweite Antenne 17 und 18 für Bündelfunk einen Datenaustausch mit der Leitstelle 90 durch. Den Multibandantennen 110 des ersten und des zweiten Kraftfahrzeuges 45 und 50 sind Meßsignale der drei Satelliten 75, 76 und 77 zugeführt, genauso wie dem GPS-Referenzempfänger 85 über dessen Antenne 86. Die Reichweite des Langwellensenders 15 mit der Rundstrahlantenne 16 ist in Figur 2 durch konzentrische Kreise dargestellt, deren Zentrum die Rundstrahlantenne 16 ist. Sowohl das erste Kraftfahrzeug 45 im Ausbreitungsgebiet 10 als auch das zweite Kraftfahrzeug 50 außerhalb des Ausbreitungsgebietes 10 befinden sich innerhalb der Reichweite des Langwellensenders 15. Das gesamte Ausbreitungsgebiet 10 befindet sich in der Reichweite des Langwellensenders 15.
Der GPS-Referenzempfänger 85 empfängt GPS-Signale von den Satelliten 75, 76 und 77. Aus den empfangenen Meßsignalen berechnet die empfängerinterne Software DGPS-Korrekturortungsdaten, die im RTCM-Format an die Leitstelle 90 ausgegeben werden. In einem Rechner der Leitstelle 90 werden die DGPS-Korrekturortungsdaten gespeichert und in Echtzeit an den Langwellensender 15 weitergeleitet. Die DGPS-Korrrekturortungsdaten werden im Langwellensender 15 einer Trägerwelle aufmoduliert und über die Rundstrahlantenne 16 im ersten Zeitschlitz 80 des erzeugten Langwellensignals abgestrahlt. Die beiden Kraftfahrzeuge 45 und 50 sind Teilnehmer einer Flotte, die von der Leitstelle 90 disponiert und gesteuert wird. Zu diesem Zweck sendet die Leitstelle 90 über den Bündelfunksendeempfänger 115 und die Antennen 17, 18 und 19 für Bündelfunk Steuersignale aus, die im Ausbreitungsgebiet 10 empfangbar sind. Die über die Sendeempfangsantenne 66 im entsprechenden Kraftfahrzeug empfangenen Steuerinformationen werden im Bordrechner 60 ausgewertet und in der Anzeigeeinrichtung 20 zur Darstellung gebracht. Die in der Empfangseinrichtung 1 ermittelten Positionen des entsprechenden Kraftfahrzeugs werden über den Bordrechner 60 dem Sendeempfänger 65 zugeführt und von der Sendeempfangsantenne 66 abgestrahlt. Über die Antennen 17, 18 und 19 für Bündelfunk werden die abgestrahlten Positionsdaten dem Bündelfunksendeempfänger 115 zugeführt und von dort an die Leitstelle 90 zur Auswertung weitergegeben. Auf diese Weise wird der Leitstelle 90 mitgeteilt, wo sich die entsprechenden Kraftfahrzeuge befinden, so daß sie von dort aus entsprechend disponiert werden können. Die Bestätigung empfangener Steuerinformationen im entsprechenden Kraftfahrzeug erfolgt durch entsprechende Tastatureingabe mittels der Tastatur 25, die über den Bordrechner 60 an den Sendeempfänger 65 zur Abstrahlung über die Sendeempfangsantenne 66 weitergeleitet wird. Auf diese Weise läßt sich das erste Kraftfahrzeug 45 im Ausbreitungsgebiet 10 von der Leitstelle 90 steuern. Befindet sich jedoch ein Teilnehmer der Flotte außerhalb des Ausbreitungsgebietes 10, wie das zweite Kraftfahrzeug 50, so läßt er sich nicht mehr über Bündelfunk von der Leitstelle 90 erreichen. Das zweite Kraftfahrzeug 50 läßt sich daher nur noch über den Langwellensender 15 erreichen, da es sich innerhalb der Reichweite dieses Senders befindet. Empfängt also die Leitstelle 90 keine Positionsdaten mehr vom zweiten Kraffahrzeug 50, dann geht sie davon aus, daß das zweite Kraftfahrzeug 50 das Ausbreitungsgebiet 10 verlassen hat. Die Leitstelle 90 wird dann über einen der drei verbleibenden Zeitschlitze 81, 82 und 83 des im Langwellensender 15 erzeugten Langwellensignals Zusatzdaten, wie beispielswiese einen codierten Ruf, der nur das gezielt adressierte zweite Kraftfahrzeug 50 erreichen soll, aussenden. Diese Nachricht wird von der Multibandantenne 110 empfangen, in der Auswerteeinheit 55 selektiert, im Bordrechner 66 ausgewertet und in der Anzeigeeinrichtung 20 zur Darstellung gebracht. Die Nachricht enthält dabei beispielsweise ein Rückmeldeaufforderungstelegramm, das den Flottenteilnehmer veranlaßt, entweder wieder in das Ausbreitungsgebiet 10 zu gelangen oder über einen anderen Weg, wie zum Beispiel Telefon oder Funktelefon Kontakt mit der Leitstelle 90 aufzunehmen. Erfolgt nach einer vorgegebenen Zeit keine Reaktion des Flottenteilnehmers, so wird über den Transponder 35 ein Signal abgestrahlt, das vom Funkgerät 30 innerhalb der Reichweite des Transponders 35 empfangbar ist, so daß auch ein Fahrzeugführer, der das Fahrzeug verlassen hat und sich innerhalb der Reichweite des Transponders 35 befindet, erreichbar ist. Auf diese Weise läßt sich natürlich auch ein Fahrzeugführer, der sein Fahrzeug innerhalb des Ausbreitungsgebietes 10 verlassen hat, erreichen. Der Transponder 35 hat jedoch eine vergleichsweise geringe Reichweite.

Durch Ausnutzung der drei verbleibenden Zeitschlitze 81, 82 und 83 läßt sich auch eine funkgesteuerte Diebstahlbeziehungsweise Wegfahrsperre innerhalb der Reichweite des Langwellensenders 15 realisieren. Die entsprechenden Zusatzdaten, die in der Auswerteeinheit 55 selektiert und vom Bordrechner 60 ausgewertet werden, laufen im Steuergerät 40 ein und führen dort zu Schaltvorgängen, die die Wegfahrsperre aktivieren beziehungsweise deaktivieren. Verläßt ein Fahrzeugführer sein Kraftfahrzeug, so teilt er dies der Leitstelle 90 mit, die daraufhin Zusatzdaten zur Aktivierung der Wegfahrsperre aussenden läßt. Möchte der Fahrzeugführer sein Kraftfahrzeug wieder benutzen, so teilt er dies ebenfalls der Leitstelle 90 mit, die daraufhin Zusatzdaten zur Deaktivierung der Wegfahrsperre aussenden läßt.

Für die Kraftfahrzeuge 45 und 50 innerhalb der Reichweite des Langwellensenders 15 lassen sich von der Leitstelle 90 in den verbleibenden drei Zeitschlitzen 81, 82 und 83 außerdem Zusatzdaten aussenden, die ein Aufwecktelegramm enthalten, das nach Selektion in der Auswerteeinheit 55 und Auswertung im Bordrechner 60 die Darstellung einer Einschaltaufforderung zum Einschalten des Sendeempfängers 65 zur Kommunikation mit der Leitstelle 90 auf der Anzeigeeinrichtung zur Folge hat.

Soll die Flottensteuerung beendet werden oder ist sie aus anderen Gründen nicht möglich, dann kann die Leitstelle über die verbleibenden drei Zeitschlitze 81, 82 und 83 Zusatzdaten aussenden lassen, die ein Einschlaftelegramm enthalten, das nach Selektion in der Auswerteeinheit 55 und Auswertung im Bordrechner 60 die Darstellung einer Ausschaltforderung zum Ausschalten des Sendeempfängers 65 oder zum Einschalten eines Stromsparmodus auf der Anzeigeeinrichtung 20 zur Folge hat. Der Transponder 35 ist nur dann erforderlich, wenn das Funkgerät 30 nicht im gleichen Frequenzband wie der Sendeempfänger 65 arbeitet, da dann eine Frequenzumsetzung erforderlich ist. Bei Verwendung des gleichen Frequenzbandes ist kein Transponder 35 erforderlich und es genügt, in diesem Frequenzband einen Kanal freizuhalten, auf dem das Funkgerät 30 angesprochen werden kann.

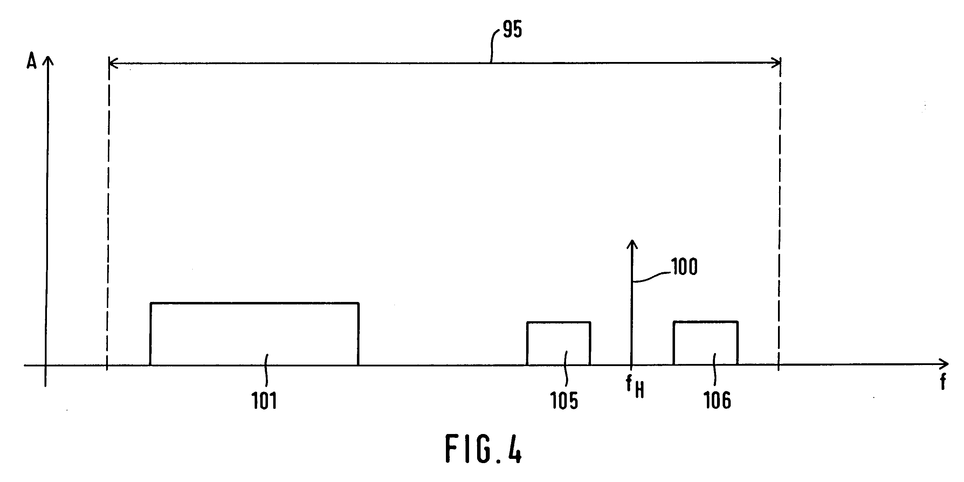

In einer weiteren Ausführungsform gemäß Figur 4 wird anstelle des Langwellensenders 15 ein Ultrakurzwellensender verwendet. Dann muß auch der Empfänger 5 für DGPS-Korrekturortungsdaten ein Ultrakurzwellenempfänger sein. In Figur 4 kennzeichnet 95 ein UKW-Frequenzband, in dem ein Audiosignal und ein RDS-Kanal übertragen werden. Dabei kennzeichnet in Figur 4 101 das Spektrum des Ausdiosignals im unteren Teil des UKW-Frequenzbandes 95 und getrennt davon im oberen Teil des UKW-Frequenzbandes befindet sich das untere Seitenband 105 und das obere Seitenband 106 des RDS-Kanals, der auf einen in der Mitte zwischen den beiden Seitenbändern 105 und 106 befindlichen Hilfsträger 100 bei der Frequenz f_{H} aufmoduliert ist.

Der RDS-Kanal 105, 106 ist eigens für Zusatzdaten eingerichtet. Der RDS-Kanal 105, 106 läßt sich wie das Langwellensignal gemäß Figur 3 in Zeitschlitze 80, 81, 82 und 83 zur Übertragung der DGPS-Korrekturortungsdaten und weiterer Zusatzdaten einteilen. Die Verwendung eines eigenen RDS-Kanals ist auch bei Langwelle denkbar.

## Patentansprüche

1. Empfangseinrichtung (1) zur Auswertung von Ortungsdaten, insbesondere von GPS-Ortungsdaten (GPS = Global Positioning System) mit einem ersten Empfänger (70) zum Empfang der Ortungsdaten und mit einem zweiten Empfänger (5), mit dem Zusatzinformationen für die Ortungsdaten empfangbar sind, dadurch gekennzeichnet, daß mit dem zweiten Empfänger (5) weitere Zusatzdaten empfangbar sind, daß eine Auswerteeinheit (55) die vom zweiten Empfänger (5) empfangenen weiteren Zusatzdaten selektiert und auswertet und daß die ausgewerteten weiteren Zusatzdaten zur Verfügung stellbar sind.

2. Empfangseinrichtung (1) nach Anspruch 1, dadurch gekennzeichnet, daß der zweite Empfänger (5) ein Langwellenempfänger ist.

3. Empfangseinrichtung (1) nach Anspruch 1, dadurch gekennzeichnet, daß der zweite Empfänger (5) ein Ultrakurzwellenempfänger ist.

4. Empfangseinrichtung (1) nach einem der vorhergehenden Ansprüche, dadurch gekennzeichnt, daß die Auswerteeinheit (55) die weiteren Zusatzdaten aus diesen zugeordneten Zeitschlitzen (81), (82) und (83) des empfangenen Signals des zweiten Empfängers (5) selektiert.

5. Empfangseinrichtung (1) nach einem der vorhergehenden Ansprüche, dadurch gekennzeichnet, daß die Auswerteinheit (55) die weiteren Zusatzdaten aus diesen zugeordneten Zeitschlitzen (81), (82) und (83) eines RDS-Kanals (105, 106) selektiert.

6. Empfangseinrichtung (1) nach einem der vorhergehenden Ansprüche, dadurch gekennzeichnet, daß die Empfangseinrichtung (1) beim Empfang von weiteren Zusatzdaten, die ein Aufwecktelegramm enthalten eine Einschaltaufforderung zum Einschalten eines Sendempfängers (65) zur Kommunikation mit einer Leitstelle (90) zur Verfügung stellt.

7. Emfangseinrichtung (1) nach einem der vorherigen Ansprüche, dadurch gekennzeichnet, daß die Empfangseinrichtung (1) beim Empfang von weiteren Zusatzdaten, die ein Einschlaftelegramm enthalten, eine Ausschaltaufforderung zum Ausschalten des Sendeempfängers (65) oder zum Einschalten eines Stromsparmodus zur Verfügung stellt.

8. Empfangseinrichtung (1) nach einem der vorherigen Ansprüche, dadurch gekennzeichnet, daß die Empfangseinrichtung (1) beim Empfang von weiteren Zusatzdaten, die ein Rückmeldeaufforderungstelegramm enthalten, eine Aufforderung zur Kontaktaufnahme mit der Leitstelle (90) zur Verfügung stellt.

9. Empfangseinrichtung (1) nach einem der vorherigen Ansprüche, dadurch gekennzeichnet, daß die Empfangseinrichtung (1) vorzugsweise über einen Bordrechner (60) mit einem Sender (35) geringer Reichweite verbunden ist und daß in Abhängigkeit der Auswertung der empfangenen weiteren Zusatzdaten Informationen von dem Sender (35) abgestrahlt werden, die von einem auf die Sendefrequenz des Senders (35) abgestimmten Funkgerät (30) empfangbar sind.

10. Empfangseinrichtung (1) nach einem der vorherigen Ansprüche, dadurch gekennzeichnet, daß die Empfangseinrichtung (1) vorzugsweise über den Bordrechner (60) mit einem Steuergerät (40) zur Aktivierung und Deaktivierung einer Diebstahlsperre verbunden ist, und daß das Steuergerät (40) in Abhängigkeit der Auswertung der empfangenen weiteren Zusatzdaten schaltet.

11. Empfangseinrichtung (1) nach einem der vorherigen Ansprüche, dadurch gekennzeichnet, daß die Empfangseinrichtung (1) vorzugsweise über den Bordrechner (60) mit einer Anzeigeeinrichtung (20) zur Darstellung der aus den empfangenen weiteren Zusatzdaten ermittelten Informationen verbunden ist.

12. Empfangseinrichtung (1) nach einem der vorherigen Ansprüche, dadurch gekennzeichnet, daß die Empfangseinrichtung (1) in einem Fahrzeug (45, 50) untergebracht ist, das Teilnehmer einer Flotte ist und über Funk von der Leitstelle (90) steuerbar ist und daß in Abhängigkeit der Auswertung der empfangenen weiteren Zusatzdaten Informationen zur Flottensteuerung im Fahrzeug (45, 50) zur Verfügung stellbar sind.
